# EUROPEAN PATENT SPECIFICATION

(11) **EP 2 946 341 B1**
(45) Date of publication and mention of the grant of the patent: **02.12.2020**
(21) Application number: 14701443.5
(22) Date of filing: 21.01.2014
(51) Int. Cl.: G06K 15/02, G06K 19/06, H04N 1/32, G06K 1/12

(54) **METHOD OF PRINTING PRINTED MATTER COMPRISING AN OPTICALLY READABLE CODE**
VERFAHREN ZUM DRUCKEN EINES DRUCKMATERIALS MIT EINEM OPTISCH LESBAREN CODE
PROCÉDÉ CONSISTANT À IMPRIMER DE LA MATIÈRE IMPRIMÉE COMPRENANT UN CODE LISIBLE OPTIQUEMENT

(30) Priority: 21.01.2013 NL 2010154; 21.01.2013 US 201361754747 P
(43) Date of publication of application: 25.11.2015
(73) Proprietor: FiliGrade B.V., 7391 EK Twello (NL)
(72) Inventor: KERVER, Johannes Bernardus, NL-5653 RK Eindhoven (NL); VAN DEN BERG, Machiel, NL-7701 HS Dedemsvaart (NL)
(74) Representative: EP&C
(86) International application number: PCT/NL2014/050028
(87) International publication number: WO 2014/112879

(56) References cited:
- EP-A1- 1 739 619
- US-A1- 2012 314 231

## Description

The invention relates to a method of providing a set of colour patterns, a software program product, a method of producing printed matter and printed matter produced in accordance with such method.

In printing technology, it is known to add a machine readable code to a pattern printed on a substrate. The machine readable code may for example be readable by a camera, an optical scanner, or other optical detection device, etc. Generally, an aim may be to provide that the code, as patterned into the colour pattern of the printed matter, is to some extent concealed to the human eye, i.e. may not be readily recognized by a human observer

In printing technology, generally use is made of patterns of different colours, which are each printed onto a substrate. The different patterns together form a resulting pattern. The patterns may for example be printed in the colours cyan, magenta and yellow. Combinations (i.e. mixes) of these colours provides for other colours as may be required: For example, a combination of yellow and magenta results in red, a combination of magenta and cyan results in blue, and a combination of cyan and yellow results in green. Generally, colours in a colour spectrum visible to the human eye may be generated by a suitable mix of cyan, yellow and magenta. It is to be understood that other colours may be applied also. In addition to the colours, further contrast may be added by the addition of a black pattern. The colours cyan, magenta, yellow and black are generally abbreviated as CMYK, whereby K represents the black pattern (contrast or kontrast). It is noted that in printing technology, generally colours are used that are opposite to the colours used in electronic display and television technology, namely Red, Green and Blue (RGB). This is because is electronic display and television technology, displayed colours add intensity: displaying full intensity red green and blue simultaneously at a television set or electronic display results in white, while in printing, the printing of full intensity generally results in black. Printing therefore generally tends to use a subtractive colour scheme such as CMY, instead of an additive colour scheme, such as RGB.

When making use of a printing colour scheme, such as CMYK, while an optical detection device that is used to read the code in the printed pattern uses an RGB like colour scheme (thus being able to detect e.g. red green and blue), the code pattern in yellow is detected by red and green detection of the detection device, the code pattern in magenta is detected by red and blue detection of the detection device , and the code pattern in cyan detected by blue and green detection of the detection device.

Instead of or in addition to the use of a colour scheme of a "standard" colour palette, in some applications specific colours (also referred to as spot colours) are used, for example in printing of packages of consumer products. These colours provide brighter colours then the mixed colours of CMYK. In Europe, spot colours are mostly defined as Pantone-colours. Pantone is a trademark of a company that provides list of colours and the recipes for commercial printers how to mix these colours out of 12 inks. Other provides of so called colour books are HKS, Toyo, ANPA and Focoltone. A difference to CMYK is that spot colours are mixed as an ink to achieve a certain colour, not in print. Also the amount of printed inks can be up to 12 inks when creating a package.

Generally, when applying a code pattern in the colour patterns to be printed, the code pattern may only be applied with a low strength, i.e. with a low modulation intensity for several reasons, such as ensuring that the code remains invisible to the human eye, preventing saturation effects (saturation is to be understood as a merging of neighbouring printed dots, which merging may occur at higher intensity), and inability to distinguish the code locally in case the local colour intensity would be to low. As a result, the readability of the code is low.

EP 1 739 619 A1 discloses to embed data in printed material. An embedding strength is controlled according to a complexity of the embedding area. If the colours of the embedding area are specific colours of near specific colours, data is not embedded.

The invention aims to increase the readability of the code in the printed matter.

In order to achieve this goal, according to an aspect of the invention there is provided a method of providing a code pattern in a set of colour patterns, the method having the features of claim 1, the colour patterns each having a different colour, the colour patterns to be printed on a substrate by a printing process to form printed matter, the method comprising the steps of:
- providing a parameter set comprising at least one parameter having a value specific for the printing process;
- adjusting the code pattern using the parameter set; and
- providing the code pattern in at least one of the colour patterns.

The colour patterns may be formed by data that represents a pattern of the respective colour as is intended for printing, and may be in any data format, such as graphical data. Each colour pattern may represent a respective colour and be intended for printing using ink having the respective colour so as to depict the respective colour pattern by means of the printing. The colour patterns are each printed - either consecutively or in one printing process step - onto a substrate. Due to the combination of the colours of the ink, a colour palette of colours visible to the human eye may be realized. In accordance with the invention, the code pattern is applied in at least one of the colour patterns. The code pattern may be any optically (e.g. machine-) readable code pattern, e.g. readably by an optical device, such as a digital camera device, a smartphone, etc. The code pattern may represent any information (data). The code pattern may e.g. be a binary 1 bit pattern, a 2 bit pattern, a spread spectrum pattern which is spread in a spatial frequency domain, etc. The code pattern may be provided in the colour patterns one time or may be repeated, e.g. in horizontal and/or vertical direction, e.g. provided an array of identical or different patterns arranged in the colour patterns. The providing the code pattern in the colour pattern(s) may be performed by modulation, superposition, multiplication or in any other way. In this context, the term printing process is to be understood as the printing process with which the colour patterns are to be printed onto the substrate. A parameter set is provided that reflects (technical) characteristics of the printing process that is applied for the printing. The parameter set reflects technical characteristics of the printing process, as will be described in more detail below. The code pattern is brought into at least one of the colour patterns, and is adjusted in order to reflect characteristics of the printing process. The adjusting of the code pattern may for example comprise adjusting a modulation depth, such as adjusting a modulation depth per colour pattern, locally adjusting a modulation depth in specific areas, etc. Also, depending on the characteristics of the process (such as the printing resolution) a pitch of the code pattern may be set, for example by scaling the code pattern. The (set of) colour patterns may be formed by a data set of e.g. monochrome graphical patterns, each representing an ink pattern of a respective ink colour to be applied onto the substrate by the printing process, so as together form a visual appearance of the printed matter. The method of providing a code pattern in a set of colour patterns may for example be performed in software by a suitable programmed computer device.

By adjusting the code pattern in accordance with the printing process, the code pattern may be provided into the colour patterns to be printed at a large strength, hence allowing a good readability of the code pattern. Also, the code pattern may be provided in the colour patterns with such a strength that it remains below level of being visible to the human eye, while providing a good readability to a camera or other readout device. It is noted that the steps of providing the code pattern in the colour pattern(s) and the step of adjusting the code pattern may be performed in the order as listed, in reverse order or parallel or simultaneously. For example, the code pattern may be provided in the colour pattern(s) and then adjusted to the printing process to be applied, or vice versa. As a further example, the code pattern may be adjusted for the printing process, then provided in the colour pattern(s) and then further adjusted to the printing process to be applied.

The printing process may comprise any printing process such as offset printing, screen printing, inkjet printing, laser printer printing, coldset and heatset rotation offset printing, dry offset printing, flexoprint, IML-printing, tampon printing and digital ink printing. The colour patterns may have any colour, and preferably correspond to the ink patterns to be applied onto the substrate by the printing process. The colour patterns may this for example comprise subtractive colour patterns. Alternatively the code may be applied in additive colour patterns (for example RGB colour patterns), which, depending on the printing process used, may be converted into subtractive colour patterns for printing.

By taking account of a characteristic of the printing process that is to be applied for printing the colour patterns (comprising the code pattern provided to at least one of the colour patterns) onto the substrate, the code patterns may be provided at a high strength into the colour patterns, so as to make the code well readable by an optical reading device, while any possibly adverse effects (such as noise, visual patterns, lines, spots, colour shifts, etc.) on a visual appearance of the colour patterns, may be prevented.

The method as described in this document can also be applied to so called spot colours.

The parameter set may comprise at least one of a minimum threshold and a maximum threshold, a code pattern modulation intensity, a sequence of printing the colour patterns, a dot size, a dot pitch, a dot shape and a screen raster orientation angle. The parameter set may comprise one or more parameters. The parameters may apply to each colour of the printing process, or separate parameters (or different values of the parameter) for each colour may be applied.

In an embodiment, the plurality of colour patterns comprises first, second, third and black colour patterns, the code pattern being applied in each of the first, second, third and black colour patterns. Generally, in printing technology, use is made of a colour palette and black. The black patterns is generally applied to add contrast and to reduce the amount of ink that would otherwise be required when dark area's would have to be created by large amounts of coloured ink. The inventors have devised that applying the code pattern to the black pattern adds to the readability of the code by for example a camera. The parameter set may take account of a maximum with which the code pattern is provided in the black colour pattern, so as to for example keep the code pattern substantial invisible to the human eye.

Characteristics of the printing may not only depend on the printing process, but also on the substrate (spreading of ink by for example capillary forces), the type of ink, the temperature and/or humidity of the substrate and/or the environment, etc. For example, when using offset printing, a minimum threshold of each colour pattern may be set to 2 - 5%, while for some other printing technologies, such as screen printing, a minimum threshold may need to be set in a range of 5% to 10%, for example 7% or 8%. Hence, a minimum local intensity of a colour pattern in order to bring the code pattern into it, may for example be set to 10% for offset printing (allowing an intensity modulation by the patterns in downward intensity direction towards the stated exemplary 2% threshold), while for other printing technologies that face a threshold of 7% or 8%, such minimum local intensity of the colour pattern in order to bring the code pattern into it, may for example be set to a higher level, for example15% in order to allow modulation in downward intensity direction towards the stated exemplary threshold. Similarly, depending on a saturation level of the printing process, substrate, ink etc, a maximum threshold above which saturation occurs, may apply (for example at 90%), and a maximum local intensity of the colour pattern in order to locally apply the code may accordingly be set to for example 80%. The maximum threshold may likewise be set per printing process. For example for offset printing processes a maximum may be set in a range between 82% and 97%, while for screen printing processes a maximum may be set in a range of 70% to 95%. Accordingly, in an embodiment, the parameter set comprises a minimum threshold and a maximum threshold per colour pattern, and wherein the step of adjusting the code pattern using the parameter set comprises only applying the code pattern at locations of the colour patterns where an intensity of the colour pattern is between the minimum threshold and the maximum threshold of the respective colour pattern.

In printing, a colour pattern may be applied as a continuum, however in many cases, the colour patterns are built up using a dot matrix. A dot shape may e.g. be round, elliptic, square, cross shaped or line shaped. When applying printing ink to the substrate, the dot shape may have effect in capillary forces, e.g. in the midrange colour tones, these effects have to be compensated or eliminated when adding the code to the artwork. Thereto, using the parameter dot size and dot pitch, a range of colour tones is identified where the neighboring dots have a size which is approximately the same as a pitch between the neighboring dots, which causes the dots to nearly touch and/or just touch each other. In the colour patterns, the areas in the identified range of colour tones are then selected, preferably in the original image, and in these selected areas, a modulation intensity of the code pattern is reduced. In the area's where the code patterns have an intensity which causes the dots to have a size where they almost or just touch each other (i.e. the dot size substantially equals the dot pitch), flow of ink between adjacent dots causes an effective size of the dots to relatively strongly increase due to capillary force of the ink when still wet, which causes a conjunction between the ink of neighboring dots. As a result, disturbances, such as lines may occur in the printed pattern in the ranges where the dots almost or just reach each other. These disturbances may be reduced, by reducing the modulation strength of the modulated code in these ranges. Accordingly, in an embodiment, the parameter set comprises dot size and dot pitch, and wherein the step of adjusting the code pattern using the parameter set comprises identifying, using the parameter dot size and dot pitch, a colour tone range in which neighboring dots have a size which is approximately the same as the dot pitch between neighboring dots, selecting, in at least one of the colour patterns, areas within the identified colour tone range, and reducing, in the selected areas, the modulation intensity of the code pattern.

Similarly, a compensation for dot shape may be provided based on a parameter dot shape of the printing process. When the dot shape is round, the above effect of capillary forces between adjacent dots is relatively more prominent (as there is a relatively large zone where the dots approach each other) while when the dot shape is square or rounded square, and the neighboring dots only approach each other at the corners of the squares, the flowing due to mutual capillary forces is smaller, so that a reduction of the local intensity of modulation may be less. Accordingly, in an embodiment, the parameter set further comprises dot shape, and wherein the modulation intensity is reduced more in the selected area's, when the dot shape is round, compared to when the dot shape is square or rounded square.

A screen angle may affects the visibility of the dots and thus may also affect the visibility of the code. Dot frequency and dot size may affect the amount of solvent on the substrate and thus the spreading of inks during the drying process. This behaviour may influence the colours and thus may this behaviour affect the visibility and readability of the code. If dots with a high contrast colour as black are provided in a screen raster whereby neighbouring dots are arranged horizontally and/or vertically in respect of each other, i.e. the dots being arranged in a horizontal and/or vertical screen raster, the human eye may detect the dots slightly easier compared to raster angles that are not vertical or horizontal. thus when contrasting colours need to be printed in a horizontal or vertical raster angle, the code pattern maybe inserted slightly weaker to maintain the invisibility. Accordingly, in an embodiment, the parameter set comprises a screen raster orientation angle, and the adjusting the code pattern in at least one of the colour patterns using the parameter set comprises:
reducing, preferably for contrasting colours, the modulation intensity of the code pattern in case a screen raster of the colour pattern is horizontally and/ or vertically aligned.

A sequence of the colours that are used in the printing process may also play a role: As during the printing process ink is added to the substrate, the solvent in the (still drying) ink of previous printed colours in a sequence is causing the current ink to spread more if this ink is printed later compared to printing this ink as the first. This behaviour also influences the colours and thus may this behaviour affecting the visibility and readability of the code. In order to reduce a possible effect of such spreading of ink, in an embodiment, the parameter set comprises a sequence of printing the colour patterns, and the step of adjusting the code pattern using the parameter set comprises: determining, using a sequence of printing of the colour patterns and a drying time of the ink, an overlap region between two successively printed colour patterns, and reducing, in the overlap region, the modulation intensity of the code pattern in the second one of the successively printed colour patterns.

In an embodiment, the parameter set comprises a modulation depth of at least one of the colour patterns, the adjusting comprises setting a modulation depth of at least one of the colour patterns in accordance with the parameter set. For IML and dry-offset, a higher modulation depth may be chosen compared to offset printing processes. Furthermore, the modulation in each of the patterns may be set at a different level. For example, in a yellow pattern (a colour to which the eye is relatively insensitive) the modulation level may be set higher, e.g. 1,5 times or 2 times higher than the modulation level in other colour patterns such as cyan or magenta. A camera however may exhibit a similar sensitivity to yellow as to cyan and magenta, allowing the code to be better detectable by the camera when applying a higher modulation level in yellow. The modulation may e.g. be an amplitude modulation, a superposition, addition, or any other way of combination of the code pattern with the colour pattern(s).

The modulation of each of the colour patterns may be set in phase, i.e. each having a same modulation direction, or for example out of phase: when out of phase, some of the colour patterns may for example be provided with a modulation that has an opposite sign compared to other ones of the colour patterns. For example, in the case of CMYK, a modulation pattern in cyan and magenta may be set opposite in sign to a modulation pattern in yellow: thus, when yellow intensity is locally increased due to the code pattern, cyan and magenta are decreased, causing a general intensity to remain about the same, while only a colour locally changes somewhat due to the code pattern, so as to reduce a visibility of the code pattern to the human eye.

In an embodiment, cyan and magenta are opposite in phase, then yellow is preferably in the phase of either cyan or magenta. Generally, yellow is set in phase with the one of cyan and magenta that exhibits a lowest density (i.e. intensity). Black is generally set in the same phase as yellow, so a combined intensity of the coded parts of the patterns is as close to the original uncoded pattern intensity as possible. As the transparency of yellow ink is generally high, even a strong code in yellow will be relatively unobtrusive to a human eye. The code in black generally has effect in the darkest parts only (as the darkest parts are generally provided with black ink in order to make them dark). As a result, when using the same phase for black and yellow, and an opposite phase for a strongest one of cyan and magenta, an intensity of the parts of the colour pattern that are provided with the code, remains quite the same, while the code pattern mostly provides for colour changes in accordance with the code pattern, which are less noticeable to the human eye (while being well detectable by a camera, given the separate detection of different colours, e.g. R,G and B by the camera).

The code pattern may be amplitude modulated onto at least one of the colour patterns applied onto the substrate in the printing process. Preferably, the code pattern is amplitude modulated onto each one of the colour patterns. The code pattern may thereby collocate (i.e. be at the same location) in each one of the colour patterns, so as to allow the optical detection device that may detect different colours, to combine (e.g. add or subtract, depending on phase relations) the patterns in the different colours in order to increase a delectability of the code pattern. In an embodiment, a modulation depth of the code pattern is asymmetrical. By applying an asymmetrical code, advantage may be taken of the fact that the human eye exhibits a more or less logarithmic sensitivity curve while a camera exhibits in general a substantially linear sensitivity: The logarithmic sensitivity curve of the eye allows a modulation towards more light to be less visible than towards more dark, so that a higher modulation towards more light may be implemented as compared to more dark, while for example remaining substantially invisible to the human eye. The code can be applied asymmetric by decreasing the amplitude of the code pattern as far as it is darker then the surrounding pixels and increasing the amplitude of the lighter parts or vice versa. In particular, when making use of a coding (e.g. 2 or more bits code amplitude level) having a plurality of amplitude levels, e.g. 4 or more amplitude levels, such logarithmic coding may be applied.

In an embodiment, the code pattern is amplitude modulated onto the colour patterns using an opposite phase (i.e. an opposite sign) for at least one of the colours as compared to another one of the colours. As a result, intensity reductions by the code pattern in one colour may collocate with intensity increases by the code pattern in another colour and vice versa, so that an overall combined intensity may be hardly unchanged by the code (thus the human eye, which is more sensitive to intensity changes than to colour changes) may find the code pattern less obtrusive or may even not notice the code pattern, while the detection device, e.g. a camera, which detects colours separately, may correlate the code patterns in the different colours, thereby increasing a detectability by the optical delection device, while making the code pattern less or even not noticeable to the human eye.

In some current graphical software applications use is made is so called layers .A layer may for example comprise patterns of each colour (including e.g. a black pattern). Multiple layers may be used, and e.g. superimposed, the layers may for example be combined by addition, subtraction, multiplication, making a layer partially transparent, etc. In an embodiment, the applying the code pattern in at least one of the colour patterns comprises: copying the respective colour pattern, applying the code pattern to the copied colour pattern, placing the copied colour pattern over the colour pattern, and combining the copied colour pattern with the colour pattern. The operations may hence be performed in a separate layer. As a result, the original patterns remain available during the application of the code, so that for example selection operations whereby certain (combined) colours are selected in order for operations to be performed in the selected area's only - as will be described below - may be performed on the original pattern, i.e. the pattern undisturbed by the code, so that a more accurate selection may be made.

In an embodiment, the method further comprises selecting at least one colour range in a combined pattern of the colour patterns, and adjusting, in the selected colour range, the modulation depth of the code in at least one of the colour patterns. Thereby, instead of altering the modulation of the code in the entire pattern (which could adversely affect other parts of the pattern), critical colour ranges may be selected and in those critical colour ranges, the code pattern (e.g. the modulation depth thereof) may be altered.

For example, in an embodiment, the selected colour range is at least one of green, orange and violet, and the modulation depth of the code pattern may be decreased in the selected colour range. The human eye is relatively sensitive to green, causing the code pattern to be more disturbing at these colours, hence at these colours (the modulation strength of) the code pattern may be attenuated. Orange and violet, amongst other colours that are heavily mixed, are causing the code to be to stark and thus disturbing visible, so the effect has to be decreased.

As another example, in an embodiment, the selected colour range is at least one of brown and black, and the modulation depth of the code may be increased in the selected colour range. The human eye is relatively insensitive to intensity changes in (dark) brown and black, causing the code pattern to be less disturbing in dark brown or black, hence at these colours (the modulation strength of) the code pattern may be increased.

The colour patterns may be cyan, magenta and yellow respectively. Any other suitable colour pattern may be applied likewise.

The code pattern may comprise any code pattern. Preferably, the code pattern comprises a two dimensional code pattern so as to bring a large amount of information into the (e.g. two dimensionally printed) printed matter. Any type of code pattern may be applied, e.g. the code pattern comprising one of a dot-code, a bar-code and a QR code.

As an example, use may be made of Steganografy: In digital images, small changes in colour strength and colour shift will hardly be noticed by a human observer. As a result, systematic (relatively small) changes may be applied in the digital image file, which may be hardly noticeable or not noticeable to a human observer. As another example a pattern of small (for example yellow) dots may be applied in the image file. Yellow is preferred because of a low sensitivity of the human eye for the colour yellow.

In order to make the code even less visible, the code pattern may (in a spatial frequency domain) be a spread spectrum code pattern, thus the information coded in the code being spread over a spatial frequency range, thereby for example making use of coding techniques similar as code division multiple access. A detection key may be applied in order to retrieve the code from the spatial pattern(s). A spread spectrum techniques

generally result in low amplitude coding exhibiting a noise like appearance, the code may easily be made invisible to the human observer.

Information carrying fields of the code pattern (e.g. dots) may be positioned next to each other. Alternatively, in order to make the code less distinct to the human eye, information carrying fields of the code pattern may mutually spaced apart, whereby parts of the original patterns are presented in between the information carrying fields.

The code pattern may be applied once to the coloured patterns, or multiple patterns may be applied at a mutual spatial distance, so as to allow detection of the code pattern even when only a part of the printed matter is optically detected by an observing camera.

According to another aspect of the invention, there is provided a method of producing printed matter comprising:
- providing a set of colour patterns by the method described above; and
- printing, by a printing process, ink onto a substrate in accordance with the colour patterns (at least one of which having been provided with the code pattern).

With the method of producing printed matter, the same or similar effects may be achieved, and the same or similar embodiments may be provided as with the method according to the invention and its various embodiments as described in this document.

Further embodiments, features and effects of the invention may become apparent from the enclosed drawing, based on which a non-limiting embodiment will be explained, wherein:
- Figure 1 depicts a highly schematic view of an example of a code pattern in accordance with an embodiment of the invention;
- Figure 2 depicts a highly schematic view of another example of a code pattern in accordance with an embodiment of the invention;
- Figure 3A - 3D depict highly schematic examples of colour patterns in Cyan, Magenta, Yellow and Black and combined colour tones;
- Figure 4A - 4D depict highly schematic examples of the colour patterns in accordance with figure 3A - 3D, in each of which a code pattern has been applied;
- Figure 5A - 5D depict highly schematic examples of the colour patterns in accordance with figure 4A - 4D, in which modulation depths of the code pattern have been amended;
- Figure 6A - 6D depict highly schematic examples of the colour patterns in accordance with figure 5A - 5D, in thresholds has been applied;
- Figure 7A - 7D depict highly schematic examples of the colour patterns in accordance with figure 6A - 6D, in which an amplitude of the code patterns has been Increased in selected parts; and
- Figure 8A - 8D depict highly schematic examples of the colour patterns in accordance with figure 7A - 7D, in which a strength of the code in selected areas has been increased;
- Figure 9A - 9D depict highly schematic examples of the colour patterns in accordance with figure 8A - 8D, in which a strength of the code in selected areas has been decreased; and
- Figure 10A - 10B depict highly schematic examples of combined patterns based in the patterns in accordance with figure 9A - 9D.

It is noted that - although in this document all figures are presented in black and while, colours (not depicted) may be applied.

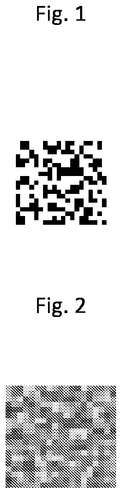

Figure 1 depicts a schematic example of a single code pattern as may be applied in the pattern to be printed. The code pattern in this example comprises a two dimensional array of bits, each having a value 0 or 1, in this example having a size of N times N fields (information carrying fields each carrying one bit). Similarly, figure 2 depicts an example of a 2 bits code, whereby each field of the code is provided with a value 0, 1, 2, 3 or 4. In the example as depicted, the values are amplitude modulated.

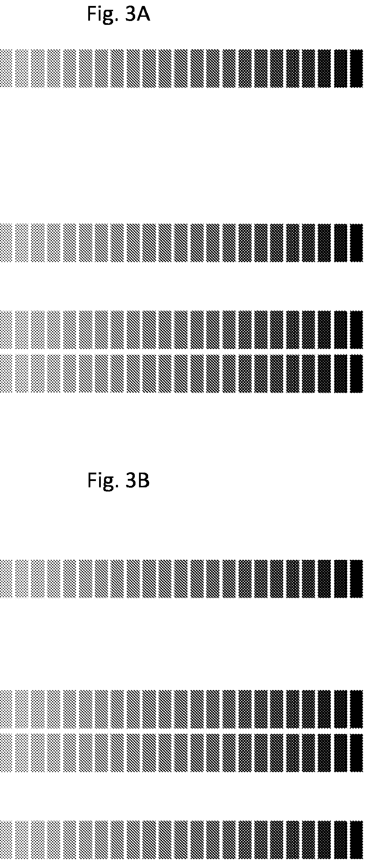

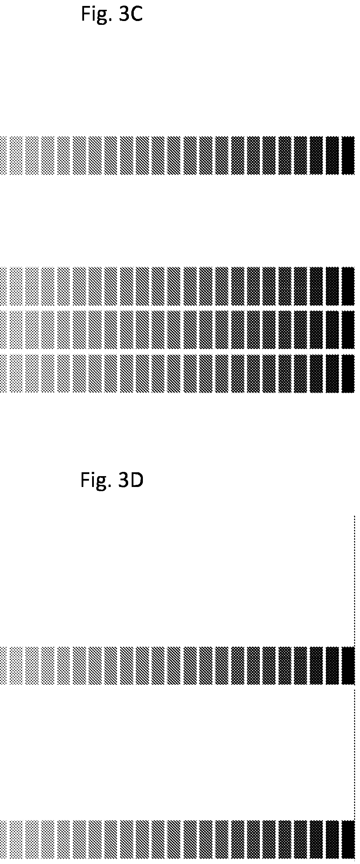

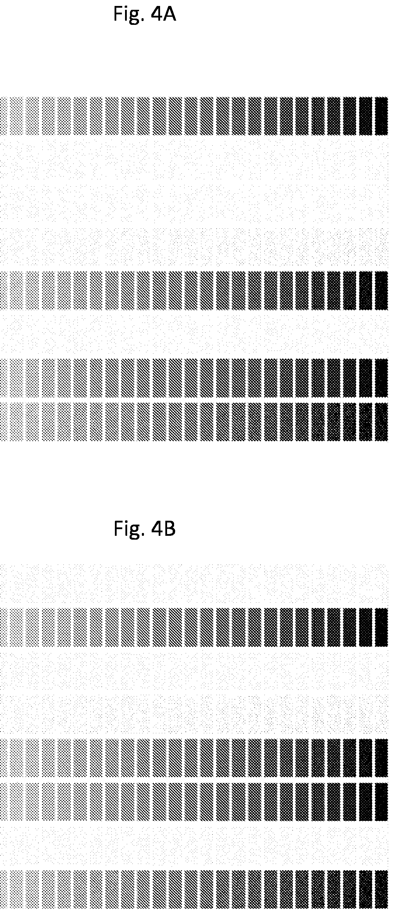

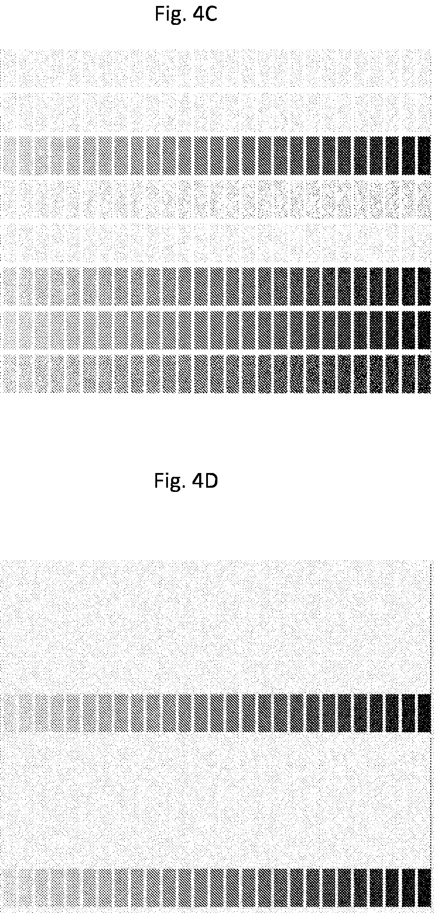

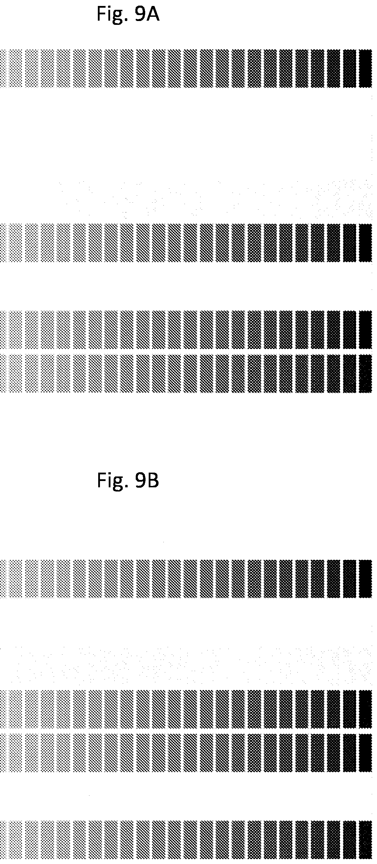

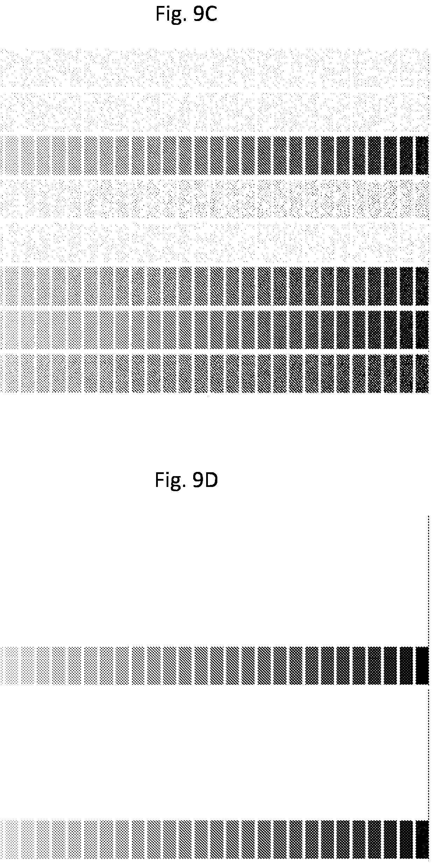

Figure 3A-3D depict an example of patterns to be printed onto a substrate. Although the pattern is represented throughout the figures in a monochrome way, it is to be understood that the colours are represented thereby: Figure 3A-3D and following figures depict horizontal sequences of from a left side towards a right side increasing intensity. From top to bottom, in each of the horizontal sequences, the following colours are represented: cyan, magenta, yellow, black, purple (i.e. a combination of cyan and magenta), red (i.e. a combination of yellow and magenta), green (i.e. a combination of yellow and cyan) and rich black (i.e. a combination of yellow, cyan, magenta and black). Although the invention will be explained based in these colour charts, it will be understood that the invention may be applied to any colour pattern, including any image, text, layout, any colour combination, etc. The patterns may be printed by the application of ink having different colours. In this example, use may be made of cyan (C), yellow (Y), magenta (M) and black (K). Thereto, respective colour patterns (C. M, Y and K) are each printed - either consecutively or in one printing process step - onto a substrate. Due to the combination of the colours of the ink, any colour visible to the human eye may be realized. Examples of the colour patterns in cyan, magenta, yellow and black (CMYK) are depicted in Figure 3A - 3D respectively. With the CMYK colours as applied in figure 3A - 3D, a colour palette of colours that are visible to the human eye may be achieved by combination. Figure 3A depicts a cyan sequence (first horizontal line), Figure 3B depicts a magenta sequence (second horizontal line), Figure 3C depicts a yellow sequence (third horizontal line) and figure 3D depicts a black sequence (fourth horizontal line). Furthermore, each of Figure 3A - 3D represent examples of combined colour tones on the 5^{th} - 8^{th} line, namely purple (i.e. a combination of cyan and magenta) on the fifth horizontal line, red (i.e. a combination of yellow and magenta) on the sixth horizontal line, green (i.e. a combination of yellow and cyan) on the seventh horizontal line and rich black (i.e. a combination of yellow, cyan, magenta and black) on the eight horizontal line. More precisely, the fifth - eighth horizontal line depict the respective component of these combined colours, being respectively C, M, Y and K. Thus, as an example, Fig 3A depicts on the 5^{th} - 8^{th} line the C component of purple, red, green and rich black respectively, Fig 3B depicts on the 5^{th} - 8^{th} line the M component of purple, red, green and rich black respectively, Fig 3C depicts on the 5^{th} - 8^{th} line the Y component of purple, red, green and rich black respectively, and Fig 3D depicts on the 5^{th} - 8^{th} line the K component of purple, red, green and rich black respectively etc. As a result, the 2^{nd}, 3^{rd}, 4^{th} and 6^{th} line of Fig. 3A are blank, as M, Y and K are not displayed in fig. 3A and as green does not contain Cyan. The same colour scheme is depicted in the same order throughout in the following figures 4A - 4D until and including Figures 9A - 9D.

In this example, the code pattern will be applied in all CMYK colour patterns. Thereto, first a copy of each of the CMYK patterns is made (the copies may for example be accommodated in a separate layer of an image processing software program). Then, in each of the four copied CMYK patterns, the code pattern is applied (i.e. the code pattern is intensity modulated on each of the colour patterns), a result of which being depicted in figures 4A - 4D. Thereto, a modulation strength in Yellow is chosen substantially two times a modulation strength in cyan an magenta. In black, the modulation strength is about 25% of the strength of cyan and magenta. The parameters of the specific printing process to be applied, are applied. Thereby, for each colour, a maximum threshold and a minimum threshold are applied. The modulation strengths are depending on the printing process, mostly on the dot frequency and dot shape, and these parameters are influenced by substrate and printing technique.

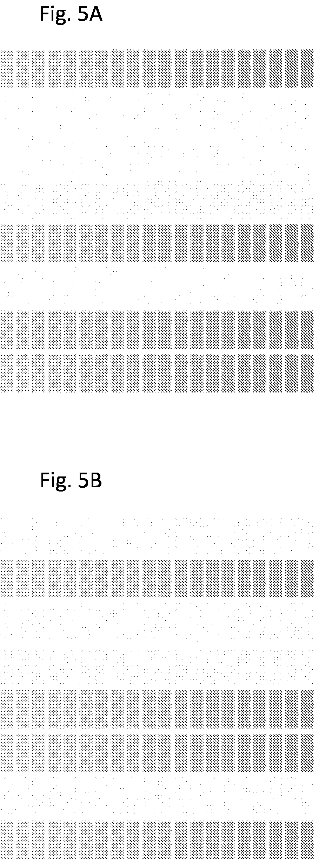

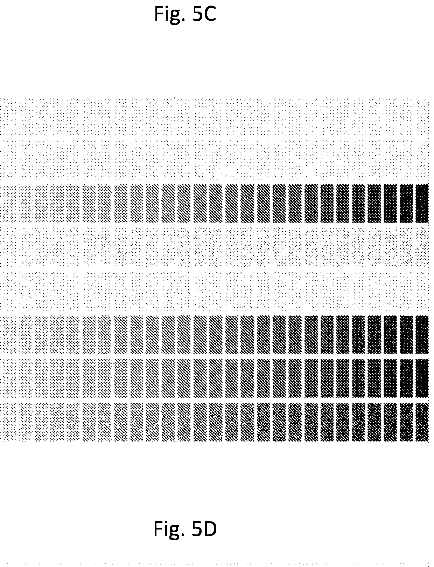

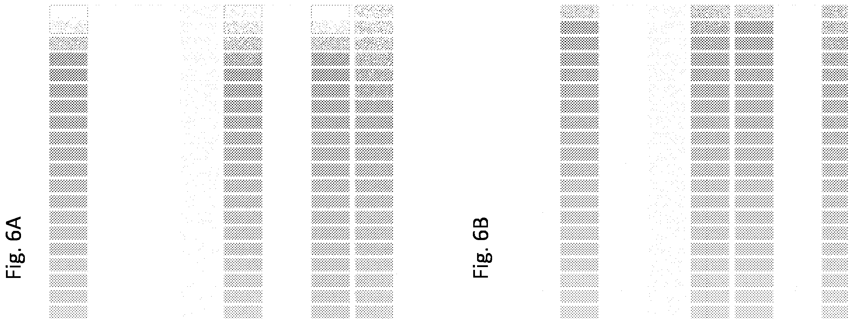

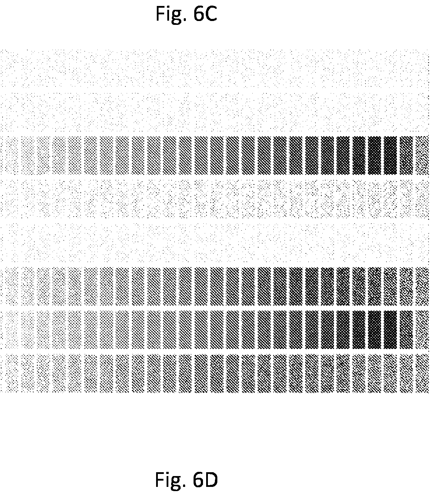

In this example, whereby the code pattern has been applied to the copied patterns, the copied patterns may be placed over the original patterns (e.g. in a separate layer) and each made partially transparent, whereby an intensity of modulation of the code pattern somewhat reduced as depicted in Figures 5A - 5D. Next, a threshold is applied a result of which being depicted in Figures 6A - 6D.

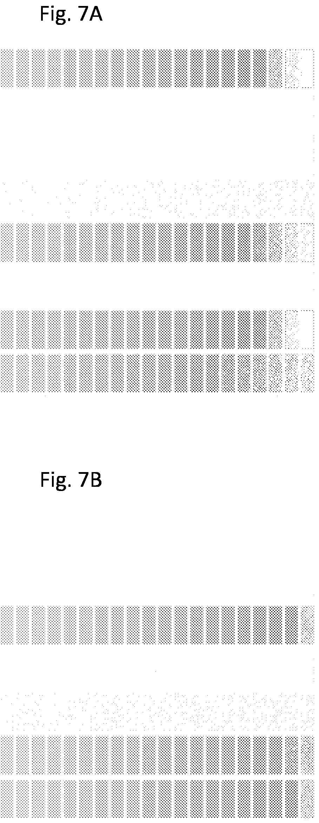

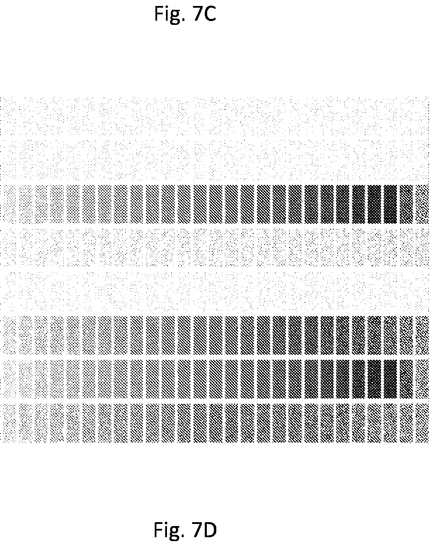

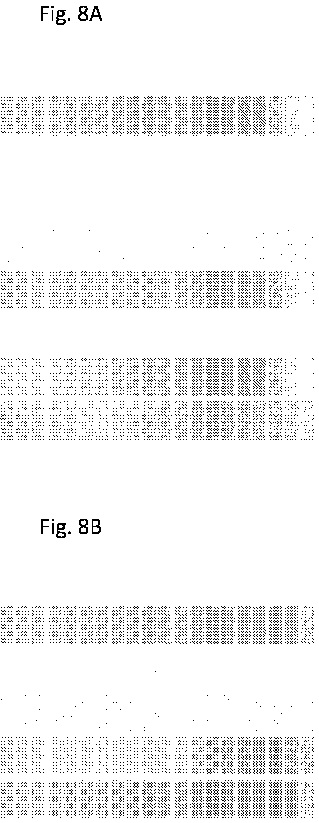

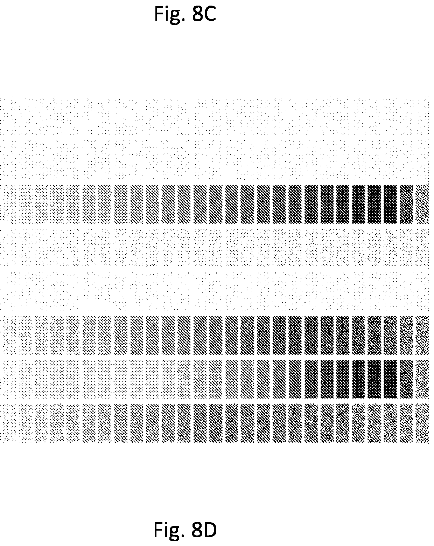

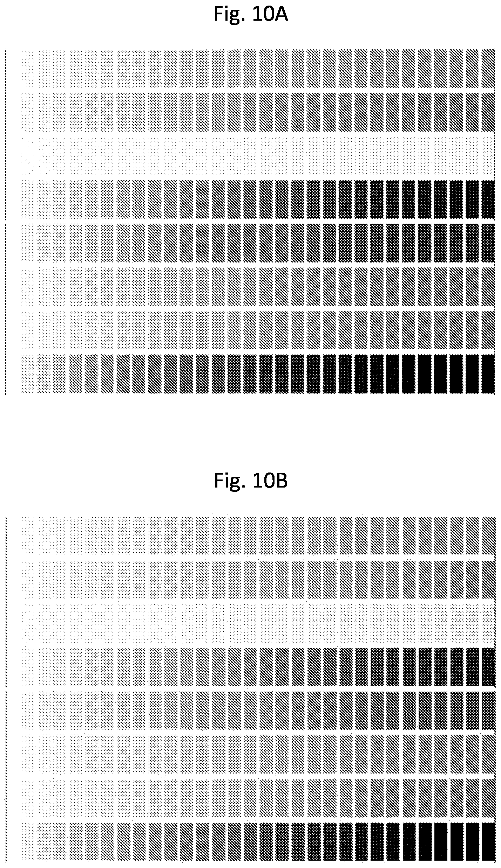

Specific area's, where the code pattern of the printed matter would be too strong (e.g. green, orange and violet), and hence would disturb the original image too much, are selected. In these area's, a modulation strength of the code may be reduced. Similarly, in the specific area's of the printed matter, such as dark brown and black or almost black, the modulation strength of the code pattern could be further increased: These area's may be selected, and a modulation strength in these parts may be increased. An example where the such increase has been performed (e.g. in black and dark brown), is depicted in Figures 7A - 7D. As the coded patterns are in this example is a separate layer, the selecting of the area's where the modulation of the code pattern is to be increased or decreased, may be performed in the original (combined) pattern, so as to select the appropriate colour ranges where disturbances of the image quality are to be expected, while being able to "discard" the disturbances made thereto by the code pattern. Once the modulation strength has been amended in the local selections, the original patterns and the copies in which the code pattern has been applied, may be combined (e.g. using the transparency setting as described above), or the original colour patterns may be discarded in favour of the colour patterns in which the code pattern has been applied. Similarly, in Fig 8A - 8D, a strength of the code pattern is reduced in for example green, purple and orange colour areas. Resulting patterns are depicted in Figures 9A - 9D, while a combined pattern where all colours CMYK are included is depicted in Figure 10A (in grey tones) and Figure 10B (original in CMYK full colour), thus providing (albeit in grey tones) an impression of the result when the pattern would be printed onto the substrate. As will be noted, although the code pattern is included in the colour patterns CMYK, it remains unobtrusive to the human eye. Thereto, for example Y and K are set in opposite phase with for example C or M, so that when Y and K locally increase in intensity due to the code pattern, C or M decreases and vice versa.

Once the printed matter has been printed using the printing process, the code pattern may be optically read by a camera, such as a camera of a smartphone, a laser scanner, or any other optical image detection device. The optical detection device may distinguish the patterned code from the pattern and thereto perform operations such as recognize a presence of a code pattern, compensate for distortions due to non parallel taking of the image, compensate for contrast, scale to compensate for differences in distance to the optical detection device, environmental illumination colour, etc, distinguish the code pattern from a remaining part of the pattern, etc. Having estimates for the scale, rotation, and translation parameters of the digital version of the image, a message reader may e.g. demodulate a spread spectrum signal from the received image. Then, information contained in the code may be derived and may be applied for any purpose (display information, use the information in the code as an internet web-link to retrieve further data, derive an authentication code, a product registration code, a validation code, or any other application. In case no code is retrieved, or in order to search for further codes, other parts of the image as detected by the detection device may be processed similarly.

The printed matter may comprise any type of printed matter, including but not being limited to for example newspapers, magazines, printed admission tickets, passports or other identification documents, bank notes, checks, credit cards, debit cards, stamps, leaflets, personal or unaddressed post mailing, bottles, softpacks, tubes, cartons or other packages of consumer products, etc. The code may comprise or represent any desired information, that may be held invisible or concealed to the human eye, or may be applied to the colour patterns in such a way that its appearance is kept relatively unobtrusive. Directing a optical reading device such as a camera to the printed matter, allows to capture the code and derive the information provided by it. The substrate may comprise paper, carton, woven or non-woven webs, plastic, or any other substance.

## Claims

1. A method of providing a set of colour patterns, the colour patterns being formed by data and each having a different colour, the colour patterns to be printed on a substrate by a printing process to form printed matter, the printing process being the process with which the colour patterns are printed onto the substrate, each colour pattern representing a respective colour and being intended for printing using ink having the respective colour to depict the respective colour pattern by means of the printing, the method comprising a step of providing the code pattern in at least one of the colour patterns,
**characterized in that** the method further comprises the steps of:
- providing a parameter set comprising at least one parameter having a value specific for the printing process, the parameter set reflecting technical characteristics of the printing process with which the colour patterns are to be printed on the substrate;
- adjusting a code pattern using the parameter set, the adjusting comprising at least one of adjusting a modulation depth of the code pattern and setting a pitch of the code pattern, the adjusting the code pattern reflecting the technical characteristic of the printing process.

2. The method according to claim 1, wherein the parameter set comprises at least one of a minimum threshold and a maximum threshold which are set per printing process, a code pattern modulation intensity which is set per printing process, a sequence of printing the colour patterns, a dot size, a dot pitch, a dot shape and a screen raster orientation angle.

3. The method according to claim 1, wherein the parameter set comprises a minimum threshold and a maximum threshold per colour pattern which are set per printing process, and wherein the step of adjusting the code pattern using the parameter set comprises: only applying the code pattern at locations of the colour patterns where an intensity of the colour pattern is between the minimum threshold and the maximum threshold of the respective colour pattern.

4. The method according to any of the preceding claims, wherein the parameter set comprises a modulation intensity of at least one of the colour patterns which is set per printing process, the step of adjusting the code pattern using the parameter set comprises: setting the modulation intensity of at least one of the colour patterns in accordance with the parameter set.

5. The method according to any of the preceding claims, wherein the parameter set comprises a sequence of printing the colour patterns, and wherein the step of adjusting the code pattern using the parameter set comprises:
determining, using a sequence of printing of the colour patterns and a drying time of the ink, an overlap region between two subsequently printed colour patterns, and
reducing, in the overlap region, the modulation intensity of the code pattern in the second one of the subsequently printed colour patterns.

6. The method according to any of the preceding claims, wherein the parameter set comprises dot size and dot pitch, and wherein the step of adjusting the code pattern using the parameter set comprises:
identifying, using the parameter dot size and dot pitch, a colour tone range in which neighboring dots have a size which is approximately the same as the dot pitch between neighboring dots,
selecting, in at least one of the colour patterns, areas within the identified colour tone range, and
reducing, in the selected areas, the modulation intensity of the code pattern, wherein preferably the parameter set further comprises dot shape, and wherein the modulation intensity is reduced more in the selected area's, when the dot shape is round, compared to when the dot shape is square or rounded square.

7. The method according to any of the preceding claims, wherein the parameter set comprises a screen raster orientation angle, and wherein the adjusting the code pattern in at least one of the colour patterns using the parameter set comprises:
reducing, preferably for contrasting colours, the modulation intensity of the code pattern in case a screen raster of the colour pattern is horizontally and/ or vertically aligned.

8. The method according to any of the preceding claims, wherein the step of providing the code pattern in at least one of the colour patterns comprises: copying the respective colour pattern, applying the code pattern to the copied colour pattern, placing the copied colour pattern over the colour pattern, setting a transparency of the copied colour pattern, and combining the copied colour pattern with the colour pattern.

9. The method according to any of the preceding claims, wherein the plurality of colour patterns comprises first, second, third and black colour patterns, the code pattern being applied in each of the first, second, third and black colour patterns.

10. The method according to any of the preceding claims, wherein the code pattern is amplitude modulated on at least one of the colour patterns, wherein preferably the code pattern is amplitude modulated on a first one and a second one of the colour patterns, whereby an amplitude modulation on the first and the second one of the colour patterns has an opposite phase, and/or wherein preferably a modulation depth is asymmetrical.

11. The method according to any of the preceding claims, further comprising selecting at least one colour range in a combined pattern of the colour patterns, and adjusting, in the selected colour range, the modulation depth of the code in at least one of the colour patterns, wherein preferably the selected colour range is at least one of green, orange and violet, and wherein preferably the modulation depth of the code pattern is decreased in the selected colour range, wherein more preferably the selected colour range is at least one of brown and black, and wherein more preferably the modulation depth of the code is increased in the selected colour range.

12. The method according to any of the preceding claims, wherein the colour patterns comprise cyan, magenta and yellow respectively, wherein preferably a modulation intensity of the code pattern in the yellow pattern is at least 1.5 times, preferably at least 2 times the modulation intensity of the code pattern in cyan and/or magenta.

13. The method according to any of the preceding claims, wherein the code pattern comprises one of a two dimensional code pattern, a dot-code, a bar-code and a QR code.

14. The method according to any of the preceding claims, wherein the code pattern is a spread spectrum code pattern.

15. The method according to any of the preceding claims, wherein information carrying fields of the code pattern are mutually spaced apart.

16. A method of producing printed matter comprising:
- providing a set of colour patterns by the method according to any of the preceding claims; and
- printing, by a printing process, ink onto a substrate in accordance with the colour patterns.

## Patentansprüche

1. Verfahren zum Bereitstellen eines Satzes von Farbmustern, wobei die Farbmuster jeweils durch Daten ausgebildet sind und jeweils verschiedene Farben aufweisen, wobei die Farbmuster auf ein Substrat durch einen Druckprozess zu drucken sind, um Drucksachen auszubilden, wobei der Druckprozess der Prozess ist, mit welchem die Farbmuster auf das Substrat gedruckt werden, wobei jedes Farbmuster eine entsprechende Farbe repräsentiert und zum Drucken mittels einer Tinte bestimmt ist, welche die entsprechende Farbe aufweist, um das entsprechende Farbmuster mittels des Druckens darzustellen, wobei das Verfahren einen Schritt eines Bereitstellens des Codemusters in mindestens einem der Druckmuster umfasst,
**dadurch gekennzeichnet, dass** das Verfahren darüber hinaus die Schritte umfasst:
- Bereitstellen eines Parametersatzes, welcher zumindest einen Parameter umfasst, der einen Wert aufweist, welcher für den Druckprozess spezifisch ist, wobei der Parametersatz technische Merkmale des Druckprozesses widerspiegelt, mit welchen die Farbmuster auf das Substrat zu drucken sind;
- Einstellen eines Codemusters mittels des Parametersatzes, wobei das Einstellen ein Einstellen eines Modulationsgrades des Codemusters und/oder ein Einstellen eines Abstands des Codemusters umfasst, wobei das Einstellen des Codemusters das technische Merkmal des Druckprozesses widerspiegelt.

2. Verfahren nach Anspruch 1, wobei der Parametersatz zumindest eines umfasst aus einem Minimum-Schwellenwert und einem Maximum-Schwellenwert, welche pro Druckprozess eingestellt werden, einer Codemuster-Modulationsintensität, welche pro Druckprozess eingestellt wird, einer Reihenfolge eines Druckens der Farbmuster, einer Punktgröße, einem Punktabstand, einer Punktform und einem Rasterorientierungswinkel.

3. Verfahren nach Anspruch 1, wobei der Parametersatz einen Minimum-Schwellenwert und einen Maximum-Schwellenwert pro Farbmuster umfasst, welche pro Druckprozess eingestellt werden, und wobei der Schritt des Einstellens des Codemusters mittels des Parametersatzes umfasst: nur Aufbringen des Codemusters an Stellen der Farbmuster, wo eine Intensität der Farbmuster zwischen dem Minimum-Schwellenwert und dem Maximum-Schwellenwert des entsprechenden Farbmusters liegt.

4. Verfahren nach einem der vorhergehenden Ansprüche, wobei der Parametersatz eine Modulationsintensität von zumindest einem der Farbmuster umfasst, welche pro Druckprozess eingestellt wird, wobei der Schritt des Einstellens des Codemusters mittels des Parametersatzes umfasst: Einstellen der Modulationsintensität von zumindest einem der Farbmuster gemäß dem Parametersatz.

5. Verfahren nach einem der vorhergehenden Ansprüche, wobei der Parametersatz eine Reihenfolge eines Druckens der Farbmuster umfasst, und wobei der Schritt des Einstellens des Codemusters mittels des Parametersatzes umfasst:
Bestimmen, unter Verwendung einer Reihenfolge eines Druckens der Farbmuster und einer Trockenzeit der Tinte, eines Überlappungsbereiches zwischen zwei aufeinanderfolgend gedruckten Farbmustern, und
Verringern, in dem Überlappungsbereich, der Modulationsintensität des Codemusters in dem zweiten der aufeinanderfolgend gedruckten Farbmuster.

6. Verfahren nach einem der vorhergehenden Ansprüche, wobei der Parametersatz eine Punktgröße und einen Punktabstand umfasst, und wobei der Schritt des Einstellens des Codemusters mittels des Parametersatzes umfasst:
Identifizieren, mittels des Parameters Punktgröße und Punktabstand, eines Farbtonbereiches, in welchem benachbarte Punkte eine Größe aufweisen, welche näherungsweise dieselbe wie der Punktabstand zwischen benachbarten Punkten ist, Auswählen, in zumindest einem der Farbmuster, von Bereichen innerhalb des identifizierten Farbtonbereichs, und
Verringern, in den ausgewählten Bereichen, der Modulationsintensität des Codemusters, wobei vorzugsweise der Parametersatz darüber hinaus eine Punktform umfasst, und wobei die Modulationsintensität mehr in den ausgewählten Bereichen verringert wird, wenn die Punktform rund ist, im Vergleich dazu, wenn die Punktform quadratisch oder abgerundet quadratisch ist.

7. Verfahren nach einem der vorhergehenden Ansprüche, wobei der Parametersatz einen Rasterorientierungswinkel umfasst, und wobei das Einstellen des Codemusters in zumindest einem der Farbmuster mittels des Parametersatzes umfasst:
Verringern, vorzugsweise für Kontrastfarben, der Modulationsintensität des Codemusters für den Fall, dass ein Raster des Farbmusters horizontal und/oder vertikal ausgerichtet ist.

8. Verfahren nach einem der vorhergehenden Ansprüche, wobei der Schritt des Bereitstellens des Codemusters in zumindest einem der Farbmuster umfasst: Kopieren des entsprechenden Farbmusters, Aufbringen des Codemusters auf das kopierte Farbmuster, Anordnen des kopierten Farbmusters über dem Farbmuster, Einstellen einer Transparenz des kopierten Farbmusters, und Kombinieren des kopierten Farbmusters mit dem Farbmuster.

9. Verfahren nach einem der vorhergehenden Ansprüche, wobei die mehreren Farbmuster ein erstes, ein zweites, ein drittes und ein schwarzes Farbmuster umfassen, wobei das Codemuster bei jedem des ersten, des zweiten, des dritten und des schwarzen Farbmusters aufgebracht wird.

10. Verfahren nach einem der vorhergehenden Ansprüche, wobei das Codemuster auf zumindest eines der Farbmuster Amplituden-moduliert wird, wobei vorzugsweise das Codemuster auf ein erstes und ein zweites der Farbmuster Amplituden-moduliert wird, wobei eine Amplitudenmodulation auf dem ersten und auf dem zweiten der Farbmuster eine entgegengesetzte Phase aufweist, und/oder wobei vorzugsweise ein Modulationsgrad asymmetrisch ist.

11. Verfahren nach einem der vorhergehenden Ansprüche, welches darüber hinaus umfasst Auswählen von zumindest einem Farbbereich in einem kombinierten Muster der Farbmuster, und Einstellen, in dem ausgewählten Farbbereich, des Modulationsgrades des Codes bei zumindest einem der Farbmuster, wobei der ausgewählte Farbbereich vorzugsweise zumindest einer ist von Grün, Orange, und Violett, und wobei der Modulationsgrad des Codemusters vorzugsweise in dem ausgewählten Farbbereich verringert wird, wobei besser der ausgewählte Farbbereich Braun und/oder Schwarz ist, und wobei besser der Modulationsgrad des Codes in dem ausgewählten Farbbereich erhöht wird.

12. Verfahren nach einem der vorhergehenden Ansprüche, wobei die Farbmuster Cyan, Magenta bzw. Gelb umfassen, wobei vorzugsweise eine Modulationsintensität des Codemusters in dem gelben Muster zumindest dem 1,5-fachen, vorzugsweise zumindest dem 2-fachen der Modulationsintensität des Codemusters bei Cyan und/oder Magenta entspricht.

13. Verfahren nach einem der vorhergehenden Ansprüche, wobei das Codemuster eines von einem zweidimensionalen Codemuster, einem Punktcode, einem Strichcode und einem QR-Code ist.

14. Verfahren nach einem der vorhergehenden Ansprüche, wobei das Codemuster ein Codemuster mit einem Streuspektrum ist.

15. Verfahren nach einem der vorhergehenden Ansprüche, wobei eine Information tragende Felder des Codemusters gegenseitig beabstandet sind.

16. Verfahren zum Herstellen einer Drucksache, umfassend:
- Bereitstellen eines Satzes von Farbmustern durch das Verfahren nach einem der vorhergehenden Ansprüche, und
- Drucken, durch einen Druckprozess, von Tinte auf ein Substrat gemäß den Farbmustern.

## Revendications

1. Procédé de mise à disposition d'un ensemble de motifs de couleurs, les motifs de couleurs étant formés par des données et chacun ayant une couleur différente, les motifs de couleurs devant être imprimés sur un substrat à l'aide d'un processus d'impression afin de former une matière imprimée, le processus d'impression étant le processus avec lequel les motifs de couleurs sont imprimés sur le substrat, chaque motif de couleur représentant une couleur respective et étant conçu pour une impression à l'aide d'une encre ayant la couleur respective afin de représenter le motif de couleur respectif au moyen de l'impression, ce procédé comprenant une étape de mise à disposition du motif de code dans au moins un des motifs de couleurs,
**caractérisé en ce que** le procédé comprend en outre les étapes suivantes :
- mise à disposition d'un ensemble de paramètres comprenant au moins un paramètre ayant une valeur spécifique au processus d'impression, l'ensemble de paramètres reflétant les caractéristiques techniques du processus d'impression avec lequel les motifs de couleurs doivent être imprimés sur le substrat ;
- ajustement d'un motif de code à l'aide de l'ensemble de paramètres, l'ajustement comprenant au moins un ajustement parmi l'ajustement d'une profondeur de modulation du motif de code et le réglage d'un pas du motif de code, l'ajustement du motif de code reflétant les caractéristiques techniques du processus d'impression.

2. Procédé selon la revendication 1, dans lequel l'ensemble de paramètres comprend au moins un parmi un seuil minimum et un seuil maximum, qui sont réglés pour chaque processus d'impression, une intensité de modulation du motif de code, qui est réglée pour chaque processus d'impression, une séquence d'impression des motifs de couleurs, une taille de point, un espacement entre les points, une forme de point et un angle d'orientation de la trame de l'écran.

3. Procédé selon la revendication 1, dans lequel l'ensemble de paramètres comprend un seuil minimum et un seuil maximum pour chaque motif de couleur, qui sont réglés pour chaque processus d'impression, et dans lequel l'étape d'ajustement du motif de code à l'aide de l'ensemble de paramètres comprend :
l'application du motif de code uniquement aux endroits des motifs de couleurs auxquels une intensité du motif de couleur se trouve entre le seuil minimum et le seuil maximum du motif de couleur respectif.

4. Procédé selon l'une des revendications précédentes, dans lequel l'ensemble de paramètres comprend une intensité de modulation d'au moins un des motifs de couleurs, qui est réglée pour chaque processus d'impression, l'étape d'ajustement du motif de code à l'aide de l'ensemble de paramètres comprend :
le réglage de l'intensité de modulation d'au moins un des motifs de couleurs selon l'ensemble de paramètres.

5. Procédé selon l'une des revendications précédentes, dans lequel l'ensemble de paramètres comprend une séquence d'impression des motifs de couleurs et dans lequel l'étape d'ajustement du motif de code à l'aide de l'ensemble de paramètres comprend :
la détermination, à l'aide d'une séquence d'impression des motifs de couleurs et d'un temps de séchage de l'encre, d'une région de superposition entre deux motifs de couleurs imprimés successivement et
la réduction, dans la région de superposition, de l'intensité de modulation du motif de code dans le deuxième des motifs de couleurs imprimés successivement.

6. Procédé selon l'une des revendications précédentes, dans lequel l'ensemble de paramètres comprend une taille de point et un espace entre les points, et dans lequel l'étape d'ajustement du motif de code à l'aide de l'ensemble de paramètres comprend :
l'identification, à l'aide du paramètre de taille du point et de l'espacement entre les points, d'une plage de nuances de couleurs dans laquelle les points adjacents présentent une taille qui est approximativement la même que l'espacement entre des points adjacents,
la sélection, dans au moins un des motifs de couleurs, de zones à l'intérieur de la plage de nuances de couleurs identifiée, et
la réduction, dans les zones sélectionnées, de l'intensité de modulation du motif de code, dans lequel, de préférence, l'ensemble de paramètres comprend en outre une forme de point et dans lequel l'intensité de modulation est réduit plus dans les zones sélectionnées, lorsque la forme du point est ronde, que lorsque le point présente une forme carrée ou carrée arrondie.

7. Procédé selon l'une des revendications précédentes, dans lequel l'ensemble de paramètres comprend un angle d'orientation de trame d'écran, et dans lequel l'ajustement du motif de code dans au moins un des motifs de couleurs à l'aide de l'ensemble de paramètres comprend :
la réduction, de préférence pour des couleurs contrastées, de l'intensité de modulation du motif de code dans le cas où une trame d'écran du motif de couleur est alignée horizontalement et/ou verticalement.

8. Procédé selon l'une des revendications précédentes, dans lequel l'étape de mise à disposition du motif de code dans au moins un des motifs de couleurs comprend : la copie du motif de couleur respectif, l'application du motif de code au motif de couleur copié, le placement du motif de couleur copié sur le motif de couleur, le réglage d'une transparence du motif de couleur copié et la combinaison du motif de couleur copié avec le motif de couleur.

9. Procédé selon l'une des revendications précédentes, dans lequel la pluralité de motifs de couleurs comprend un premier, un deuxième, un troisième motifs de couleurs et un motif de couleur noir, le motif de code étant appliqué dans chacun des premier, deuxième et troisième motifs de couleurs et du motif de couleur noir.

10. Procédé selon l'une des revendications précédentes, dans lequel le motif de code est modulé en amplitude sur au moins un des motifs de couleurs, dans lequel, de préférence, le motif de code est modulé en amplitude sur un premier et un deuxième des motifs de couleurs, moyennant quoi une modulation en amplitude sur les premier et deuxième motifs de couleurs présente une phase opposée et/ou dans lequel, de préférence, une profondeur de modulation est asymétrique.

11. Procédé selon l'une des revendications précédentes, comprenant en outre la sélection d'au moins une plage de couleurs dans un motif combiné des motifs de couleurs et l'ajustement, dans la plage de couleurs sélectionnée, de la profondeur de modulation du code dans au moins un des motifs de couleurs, dans lequel, de préférence la plage de couleurs sélectionnée est au moins une parmi le vert, l'orange et le violet et dans lequel, de préférence, la profondeur de modulation du motif de code est diminuée dans la plage de couleurs sélectionné, dans lequel, de préférence, la plage de couleurs sélectionnée est au moins une parmi le brun et le noir, et dans lequel, de préférence, la profondeur de modulation du code est augmentée dans la plage de couleurs sélectionnée.

12. Procédé selon l'une des revendications précédentes, dans lequel les motifs de couleurs comprennent du cyan, du magenta et du jaune respectivement, dans lequel, de préférence, une intensité de modulation du motif de code dans le motif jaune est au moins 1,5 fois, de préférence au moins 2 fois l'intensité de modulation du motif de code dans le cyan et/ou le magenta.

13. Procédé selon l'une des revendications précédentes, dans lequel le motif de code comprend un parmi un motif de code bidimensionnel, un code à points, un code barre et un code QR.

14. Procédé selon l'une des revendications précédentes, dans lequel le motif de code est un motif de code à étalement de spectre.

15. Procédé selon l'une des revendications précédentes, dans lequel les champs comportant les informations du motif de code sont espacés entre eux.

16. Procédé de production d'une matière imprimée, comprenant :
- la mise à disposition d'un ensemble de motifs de couleurs à l'aide du procédé selon l'une des revendications précédentes ; et
- l'impression, à l'aide d'un processus d'impression d'encre sur un substrat en fonction des motifs de couleurs.
